Europäisches Patentamt

European Patent Office

Office européen des brevets

(11) Publication number: **0 233 953**
**A1**

## (12) EUROPEAN PATENT APPLICATION

(21) Application number: **85309332.6**

(22) Date of filing: **20.12.85**

(51) Int. Cl.⁴: **B01D 29/42** , B01D 29/46

(43) Date of publication of application:
**02.09.87 Bulletin 87/36**

(84) Designated Contracting States:
**AT BE CH DE FR GB IT LI LU NL SE**

(71) Applicant: **Drori, Mordeki**
**89 Zahal Street**
**Kiron(IL)**

(72) Inventor: **Drori, Mordeki**
**89 Zahal Street**
**Kiron(IL)**

(74) Representative: **Raynor, John et al**
**W.H. Beck, Greener & Co 7 Stone Buildings**
**Lincoln's Inn**
**London WC2A 3SZ(GB)**

(54) **Multiple-disc type filters.**

(57) A filter that comprises a stack of filter discs within its housing with the side faces of the discs formed with surfaces effective to filter the fluid flowing between them from the housing inlet to the outlet, according to one embodiment of the present invention, at least some of the discs being formed with a serrated edge at the upstream side of the stack facing the housing inlet, which serrated edges are effective to increase the upstream filter surface and also to form pockets for receiving dirt particles. According to another embodiment of the present invention, the thickness of each of the filter discs is smaller at its upstream side than at its downstream side, and/or the depth of their grooves is larger at the upstream side than at the downstream side, such that the upstream side of the stack of filter discs is formed with pockets between adjacent discs, in addition to said grooves, for receiving and holding foreign particles separated from the fluid.

FIG 1

## MULTIPLE-DISC TYPE FILTERS

The present invention relates to multiple-disc type filters, such as are now widely used in a number of different applications for removing foreign particles, such as dirt, from a fluid, such as irrigation water.

The multiple-disc type filter is now widely used in a number of different applications for filtering fluids particularly for removing dirt particles in water irrigation systems. Briefly, this type filter includes a plurality of filter discs disposed in a stacked arrangment within the filter housing, with the side faces of adjacent discs being ribbed and contacting each other to provide a large number of narrow passages for filtering the fluid flowing through the stack of discs in the radial direction.

Cleaning the filter can be done manually by opening the filter housing and rinsing the discs with a water spray, or automatically by including a backwash nozzle which is automatically made operative by a differential-pressure device sensing the pressure drop across the stack of filter discs.

In my copending Israel patent specification 68288 filed April 1, 1983, there if disclosed a multiple-disc type filter in which the two contacting side faces of each pair of adjacent discs include one side face which is formed with a plurality of filtering ribs, and a second side face which is smooth or flat. Such a construction has been found to facilitate cleaning the filter, particularly when the filter is automatically cleaned by a backwash nozzle. In one embodiment described therein, alternate discs of the stack are formed with ribs on both sides faces and the remaining alternate discs are flat on both side faces; and in a second described embodiment, all the discs of the stack are of like construction, being formed with the ribs on one side and being flat on the other side face.

An object of the present invention is to provide a multiple-disc type filter effective to increase the dirt-holding capacity of the overall filter.

According to a broad aspect of the present invention, there is provided a filter including a housing having an inlet and an outlet, and a stack of filter discs within the housing with the side faces of the discs formed with surfaces effective to filter the fluid flowing between them from the housing inlet to the housing outlet; characterized in that at least some of the discs are formed with a serrated edge at the upstream side of the filter disc stack facing the housing inlet, which serrated edges are effective to increase the upstream filter surface and also to form pockets for receiving dirt particles.

The invention is particularly useful in the type of filter described in the above-cited patent application, and will therefore be described below with respect to that application, although it will be appreciated that the invention could advantageously be used in other applications as well.

According to a further broad aspect of the present invention, there is provided a filter including a housing having an inlet connectable to an upstream pipe, and an outlet connectable to a downstream pipe; and a stack of filter discs disposed within the housing and formed with grooved surfaces along their side faces effective to separate foreign particles from the fluid flowing between the filter discs from the upstream side of the stack to the downstream side thereof; characterized in that the thickness of each of the filter discs is smaller at its upstream side than at its downstream side, and/or the depth of their grooves is larger at the upstream side than at the downstream side, such that the upstream side of the stack of filter discs is formed with pockets between adjacent discs, in addition to said grooves, for receiving and holding foreign particles separated from the fluid.

In one described embodiment, the thickness of each of the filter discs increases uniformly from its upstream side to its downstream side; and in a second described embodiment, the depth of the grooves of each filter disc decreases uniformly from its upstream side to its downstream side.

In a further embodiment of the invention described above, at least some of the discs may be provided with serrated edges along their upstream side to further increase the volume of the pockets formed in the disc stack.

In the described embodiments, the discs are of annular configuration, and therefore the pockets formed in the stack are also of annular configuration.

Further features and advantages of the invention will be apparent from the description below.

The invention is herein described, by way of example only, with reference to the accompanying drawings, wherein;

Fig. 1 is a longitudinal sectional view illustrating one form of multiple-disc filter constructed in accordance with the present invention;

Fig. 2 is an enlarged end view, partly in section, illustrating the stack of filter discs in the filter body of Fig. 1 according to one embodiment of the present invention;

Fig. 3 is a sectional view along lines a --a of Fig. 2;

Fig. 4 is a fragmentary, three-dimensional view illustrating two adjacent discs in the filter body of Figs. 1 and 2;

Fig. 5 is a sectional view, corresponding to that of Fig. 3, illustrating a modification in the filter construction;

Fig. 6 is a fragmentary, three-dimensional view illustrating two adjacent filter discs in another construction according to the invention;

Fig. 7 is a fragmentary end-elevational view illustrating another construction in accordance with the invention; and

Fig. 8, 9 and 10 illustrate another possible disc construction.

Fig. 11 illustrates one of the discs in the filter of Fig. 1 according to another embodiment of the present invention;

Fig. 12 is an enlarged sectional view, along lines III - III of Fig. 11;

Fig. 13 is a further enlarged view of one of the discs in Fig. 12;

Fig. 14 is a view corresponding to that of Fig. 12 illustrating a modification in the construction of the filter discs, and Fig. 15 is an enlarged view thereof corresponding to Fig. 13;

Fig. 16 and 17 are sectional views corresponding to that of Fig. 12, but illustrating further modifications in the disc construction; and

Fig. 18 is a fragmentary three dimensional view illustrating a further modification in the construction of the filter discs.

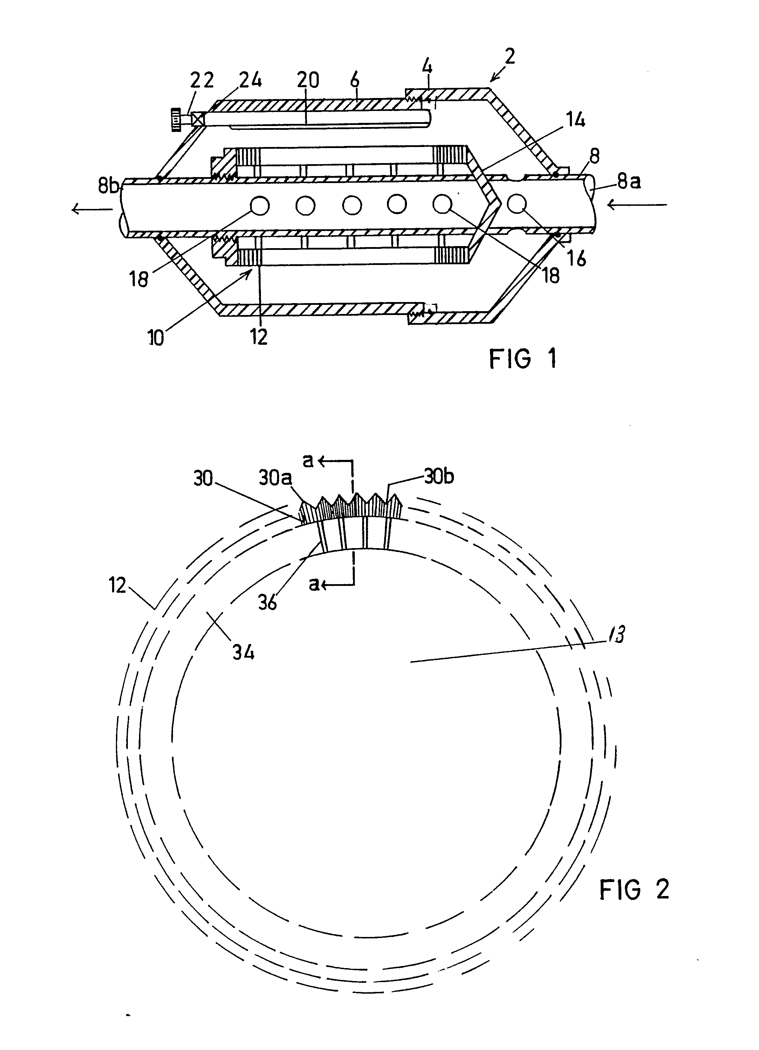

The filter illustrated in Fig. 1 is an in-line filter adapted to be coupled directly to a supply pipe of a water irrigation system. The filter includes a housing, generally designated 2, comprising two outer housing sections 4 and 6 threadedly connected together, and an inner tubular section 8. On end 8a of the latter section constitutes the inlet to the filter and is adapted to be coupled to the upstream supply pipe, and the opposite end 8b constitutes the outlet from the filter and is adapted to be coupled to the downstream supply pipe.

A filter body, generally designated 10, is disposed within housing 6 and comprises a plurality of filter discs 12 in a stacked arrangement with the side faces of adjacent discs contacting each other for filtering the water (or other fluid) flowing through the housing inlet 8a to the outlet 8b. To constrain the water to flow through this path, the tubular housing section 8 is provided with a conical deflector 14 at its inlet end 8a; a first plurality of openings 16 on the inlet side of this deflector; and a second plurality of openings 18 on the outlet side of this deflector. The water flowing into inlet 8a of the housing is thus forced to flow through a stack of filter discs 12 in the radially-inward direction, i.e., from the outer face to the inner face of the discs, before the filtered water reaches the outlet openings in the tubular housing section 8.

The filter illustrated in Fig. 1 further includes a backwash nozzle 20 connected to a dirt-purging outlet conduit 22 via a valve 24. Whenever the filter has to be cleaned, valve 24 is opened, either manually or automatically by a differential pressure sensor sensing the pressure drop across the filter body, to cause the dirt particles separated from the water by the filter stack 10 to be backwashed through the nozzle 20 and out through the dirt-purging outlet 22. During such a backwash operation, relative movement is effected between the filter stack 10 and the backwash nozzle 20, either by rotating the filter stack 10 with respect to the backwash nozzle 20, or by rotating the backwash nozzle 20 with respect to the filter stack 10.

Filters of the foregoing general type are disclosed in the patent literature, in Israel Patent Specification 68288, and in the other patent specifications referenced therein; therefore further details of the construction and operation of such multiple-disc filters are not set forth herein.

The above-cited patent specification further described the advantages in the foregoing construction in facilitating cleaning the filter, particularly when the filter is automatically cleaned by a backwash nozzle.

The present invention provides further important advantages in such a filter construction in increasing the filtering capacity, and particularly the dirt-holding capacity, of the filter which again is particularly advantageous when the filter is automatically cleaned by the backwash nozzle. According to one embodiment of the present invention, this is accomplished by forming at least some of the filter discs 12 with a serrated edge at the inlet of upstream side of the filter body, which serrated edges are effective to increase the filtering surface for a given circumference of the filter body, and also to form pockets for receiving dirt particles. Such a construction may take a number of different forms.

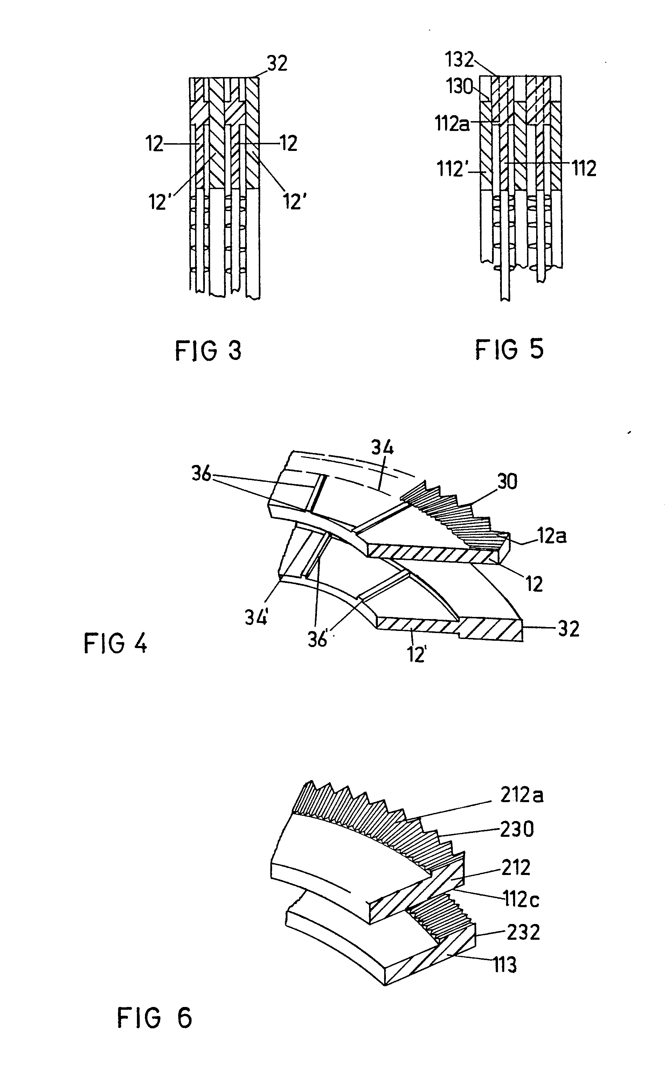

Figs. 2, 3 and 4 illustrate one preferred form for such a construction. In this form, the ribbed filter discs 12 include the serrations, therein designated 30, along the outer edges (on the upstream side of the filter body 10 in Fig. 1), while the flat-faced alternate discs 12′ are formed with smooth edges 32. As shown in these figures, the outer edges of the alternate, ribbed discs 12 are formed with notches or teeth which define the serrations 30, each serration including a peak 30a (Fig. 2) and a valley 30b. The alternate, non-ribbed discs 12′

are formed with smooth edges 32 are of a diameter substantially equal to that of the peaks 30a of the serrations 30 in the ribbed, serrated-edged discs 12.

As also shown in Figs. 2 and 4, the ribs 12a of each ribbed disc 12 are formed in a narrow annular ring 34 extending along the outer edge of the disc, the disc also being formed with a plurality of radially-extending ribs 36. The non-ribbed, smooth-edged discs 12' are similarly formed with a narrow annular outer ring 34' and with a plurality of radially-extending ribs 36'. The ribs 12a in the ribbed discs 12 may be formed radially or tangentially to their center openings 13.

It will thus be seen that when all the discs are stacked together, with the ribbed, serrated-edged discs 12 alternating with the non-ribbed, smooth-edged discs 12', the serrations in the former are effective to increase the filtering surface for a given circumference of the filter stack, and also to form pockets for receiving dirt particles. This increased filtering surface, and the pockets for accumulating the dirt particles, substantially increase the filtering and dirt-holding capacity of the filter for a given size.

Fig. 5 is a view similar to that of Fig. 3 but illustrating a variation, wherein the discs 112 found with the ribs 112a are smooth (i.e. non-serrated) at their outer edges 132, whereas the non-ribbed discs 112' are found with serrations 130.

Fig. 6 illustrates the invention embodied in a filter construction wherein all the discs, therein designated 212, of the stack, are of like construction, each being formed with the ribs 212a on one side face, and being flat and smooth on the other side face of 112c. The discs are all stacked with the ribbed side faces of one disc in contact with smooth side face of the next adjacent disc. In this construction, alternate discs 212 are formed with serrated edges 230, while the remaining alternate discs 113 are formed with the non-serrated or smooth edges 232, such that the serrations also increase the filtering surface of the stack, and also form pockets for receiving dirt particles, as in the previously described embodiment. In the embodiment of Fig. 6, the smooth-edged discs 113 are preferably also of a diameter substantially equal to that of the peak of the serrations, whereby the outer surface of the stack will be substantially smooth except for the above-described pockets formed by the serrations 230.

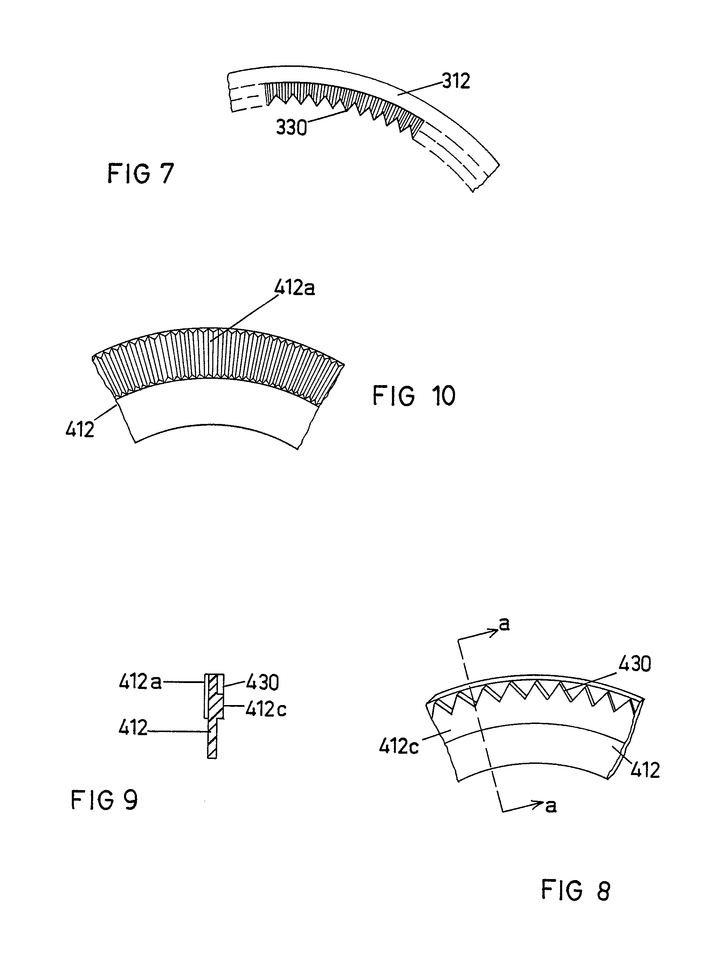

In all of the above-described embodiments, the outer edges of the discs in the stack are formed with the serrations, since these are the edges which are on the upstream side of the filter body, i.e. the side facing the housing inlet 8 (Fig. 1). It will be appreciated, however, that the invention could also be embodied in a filter wherein the inner edges of the filter discs are on the upstream side of the filter body. This is illustrated in Fig. 7, wherein it will be seen that the filter discs 312 are formed with the serrations 330 along their inner edges, to increase the filtering surface and also to form the dirt-receiving pockets as described above, along the inner edges of the filter discs.

Figs. 8, 9 and 10 illustrate a further variation wherein the discs 412 are all of the same type as illustrated in Fig. 6, but instead of having the serrations 430 formed in alternate discs, they are formed for only a part of the thickness (preferably one-half thickness) of each disc. In these figures, the serrations 430 are found in the flat face 412c of each disc, but it will be appreciated they could also be found in the ribbed face 412a of each disc.

Many other variations may be made. Thus, although it is preferably to form the dirt-receiving pockets by serrating the edges of alternate discs, particularly in a filter including a cleaning nozzle, it will be appreciated that the increased filtering surface, and also the pockets, can be provided by serrating all of the discs of the stack, or every third, fourth, etc. disc. Another alternative is to have the serrated discs in groups of two, three, etc., each group separated by a non serrated disc. Further, the serrations need not be of the straight-edged, saw-tooth type illustrated in the drawings, but could be curved edge serrations.

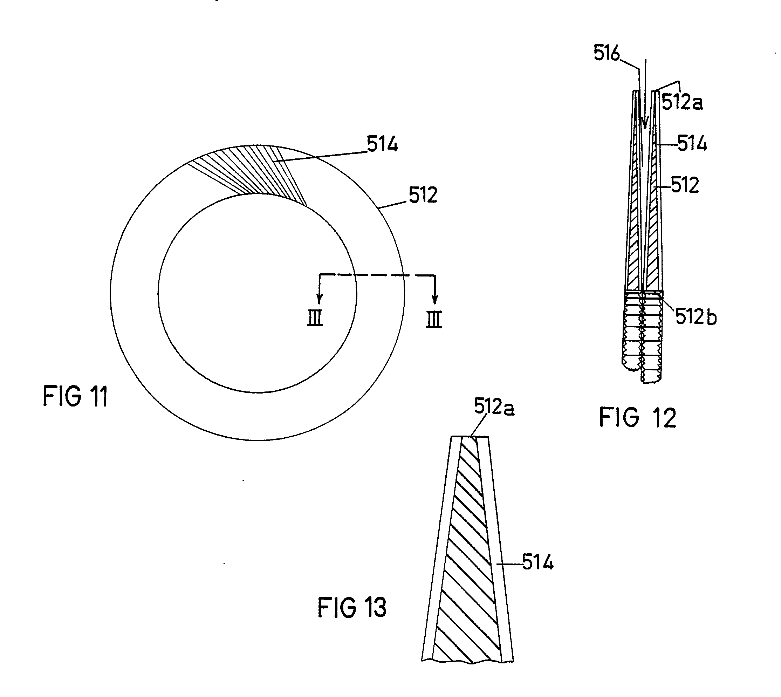

Figs. 11, 12 and 13 illustrate an alternative embodiment of filter disc 512 useful in the embodiment of Fig. 1. In this construction, the thickness of each filter disc is smaller at its upstream surface than at its downstream surface, such that when the discs 512 are arranged to form a stack 10 (Fig. 1), the upstream (outer in this case) surface of the stack defines annular pockets between adjacent discs for receiving and holding foreign particles separated from the fluid (e.g., water).

Each of the filter discs 512 is formed on its opposite side faces with a plurality of grooves 514. As shown in Fig. 11, grooves 514 are slanted at an angle (e.g., from 45 to 60 degrees) with respect to the radial line through the disc. The grooves 514 on the opposite side faces of the disc are slanted at the same angle but in the opposite direction, as known in filters in this type.

As shown particularly in Figs. 12 and 13, the grooves 514 are preferably of substantially uniform depth from the upstream (outer) side 512a of the disc to the downstream (inner) side 512b of the disc 512. However, the thickness of the upstream side 512a of the disc is relatively small and increases uniformly to the upstream side 512b. Thus, when a plurality of discs are stacked together, they define, between each pair of contacting discs, an annular pocket 516 of relatively large depth at the upstream side 512a of the discs, and decreasing in depth towards the downstream sides 512b. The overall capacity of the stack discs, for removing and retaining direct particles from the fluid being filtered, is therefore substantially increased by these annular packets 516, as compared to the conventional disc construction wherein the removed dirt particles are retained either within the grooves 514 or on the outer face of the disc stack.

Preferably, the overall thickness of the downstream end 512b of each disc 512 is at least twice that of its upstream endnd 512a. As one example, the overall thickness of each disc 512 at its upstream end 512a may be 0.5 mm, wherein the grooves on the opposite faces are each 0.2 mm in depth and the nongrooved intermediate section is 0.1 mm; and the downstream side 512b of each disc may have an overall thickness of 1.0 mm; wherein the grooves 514 on each face are still 0.2 mm in depth, and the nongrooved intermediate section is 0.6 mm.

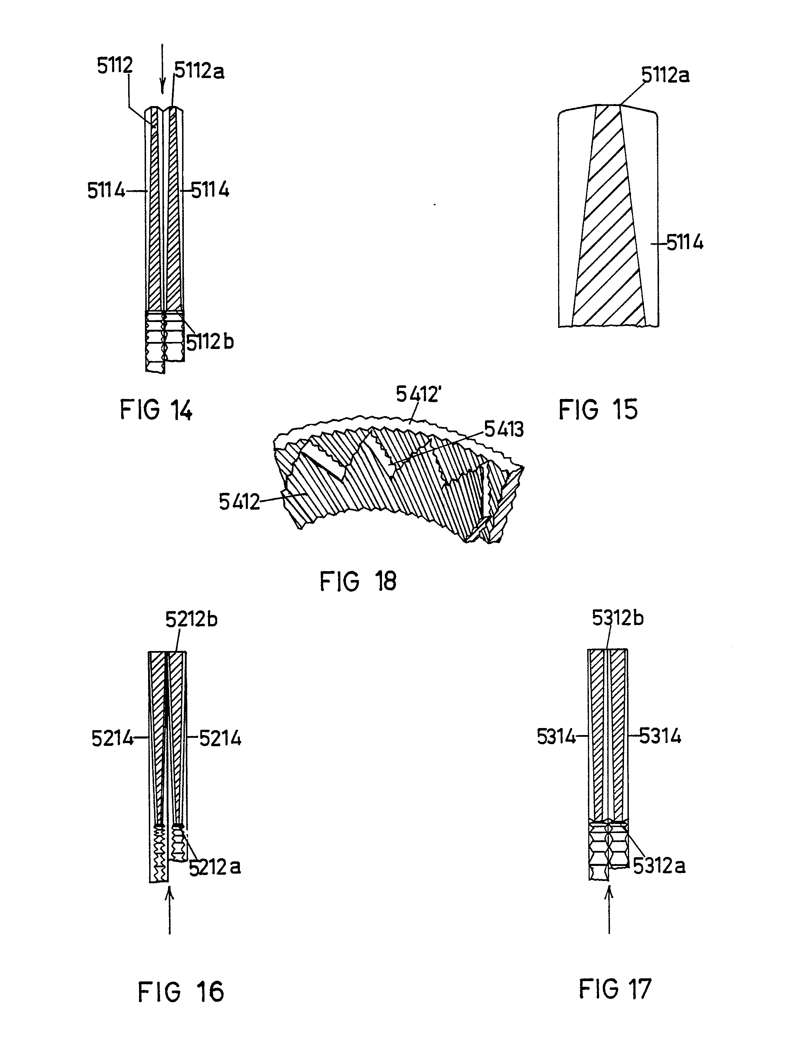

Figs. 14 and 15 illustrate another construction of the filter discs, therein designated 5112, wherein the grooves 5114 on the opposite side faces uniformly decrease in depth from the upstream sides 5112a of the discs towards their downstream sides 5112b. In this case, it is preferred that the depth of each groove at the upstream side of the disc be at least twice that at the downstream side.

As one example, the grooves 5114 on each side face of the discs 5112 may have a depth of 0.4 mm, at its upstream side 5112a uniformly decreasing to a depth of 0.2 mm at its downstream side 5112b. In this example, the thickness of the ungrooved intermediate section of the disc is 0.2 mm at its upstream side so that its overall thickness at its upstream side is 1.0 mm; and the thickness of the ungrooved intermediate section of the disc is 0.6 mm at its downstream side 5112b so that the overall thickness of the downstream side of the groove is also 1.0 mm. Thus, when a plurality of such discs are stacked together, as shown in Fig. 1, the varying depth grooves 5114 define annular pockets between each pair of adjacent discs for receiving and holding substantial quantities of foreign particles separated from the fluid being filtered.

Figs. 16 and 17 illustrate arrangements similar to Figs. 12 and 14 respectively, but wherein the fluid flows in the opposite direction through the filter stack, i.e., radially outwardly rather than radially inwardly. Such constructions would be used when the fluid is inletted into the center of the stack, so that upstream surfaces of the filter discs are at the inner sides, as shown at 5212a and 5312a, respectively, in Figs. 16 and 17, the outer sides of the filter discs being thereby the downstream sides through which the clean fluid exits, as shown at 5212b and 5312b in Figs. 16 and 17 respectively.

Otherwise, the embodiment of Fig. 16 is of the same construction as that illustrated in Figs. 12 and 13, wherein the grooves 5214 on the opposite side faces of the discs are of uniform depth, the nongrooved section of the discs varying in thickness; and the construction illustrated in Fig. 17 is the same as in Fig. 14 wherein the depths of the grooves 5314 decreases uniformly from the upstream sides 5312a of the discs to their downstream sides 5312b.

Fig. 18 illustrates a still further arrangement that may be used in order to further increase the dirt-removing and dirt-holding capacity of the filter. The modification illustrated in Fig. 18 accomplished this by having at least some of the discs, preferably every other disc, formed with serrated edges along their upstream surfaces to define additional pockets for removing and retaining dirt particles as described above with reference to Figs. 2-10. Fig. 18 illustrates only the upstream side of two discs, therein designated 5412 and 5412', wherein it will be seen that disc 5412 is provided with serrated edges 5413 along its upstream side, whereas the next adjacent disc 5412' is not. The discs illustrated in Fig. 18 may be otherwise the same constructions as described above with respect to any of Figs. 2-17.

While the invention has been described with respect to several preferred embodiments, it will be appreciated that many other variations, modifications and applications of the invention may be made.

## Claims

1. A filter including a housing having an inlet and outlet, and a stack of filter discs within the housing with the side faces of discs formed with surfaces effective to filter the fluid flowing between them from the housing inlet to the housing outlet; characterized in that at least some of said discs are formed with a serrated edge at the upstream side of the filter disc stack facing the housing inlet, which serrated edges are effective to increase the upstream filter surface and also to form pockets for receiving dirt particles.

2. The filter according to Claim 1, wherein discs having serrated edges are separated by at least one disc having a smooth edge.

3. The filter according to Claim 2, wherein each of the serrated discs is formed with ribs on both side faces, the smooth-edge discs being flat.

4. The filter according to Claim 2, wherein each of the smooth-edge discs is formed with ribs on both side faces, the side faces of the serrated-edge discs being flat.

5. The filter according to any one of claims 2 to 4, wherein the diameter of the smooth edge discs is substantially equal to that of the peak of the serrations of the serrated-edge discs.

6. The filter according to Claim 5, wherein alternate discs are formed with said serrated edges and are separated by smooth-edge discs.

7. The filter according to Claim 1, wherein the two contacting side faces of each pair of adjacent discs include one side face which is formed with a plurality of filtering ribs, and a second side face which is flat.

8. The filter according to Claim 7, wherein alternate discs of the stack are formed with ribs on both side faces, and the remaining alternate discs are flat on both sides.

9. The filter according to Claim 8, wherein the discs ribbed on both side faces are formed with said serrated edges, and those flat on both side faces are formed with smooth edges and have a diameter substantially equal to that of the serrations of the serrated-edge discs.

10. The filter according to Claim 8, wherein the discs flat on both side faces are formed with said serrated edges, and those ribbed on both side faces are formed with said smooth edges and have a diameter substantially equal to that of the serrations in the serrated-edge discs.

11. The filter according to Claim 7, wherein all the discs of the stack are of like constructions, being formed with filtering ribs on one side face and being flat on the other side face, the discs then being stacked with the ribbed side face of one disc in contact with the flat side face of the next adjacent disc.

12. The filter according to Claim 11, wherein alternate discs of the stack are formed with said serrated edges, and the remaining alternate discs are formed with smooth edges and are of a diameter substantially equal to the peak of the serrations of the serrated-edge discs.

13. The filter according to Claim 1, Claim 8 or Claim 11, wherein all said discs of the stack are formed with said serrated edges.

14. The filter according to Claim 1, wherein each of said discs is formed with a central opening, the inner edges of said discs constituting the upstream filter surface facing the housing inlet and being formed with said serrated edges.

15. The filter according to Claim 1, wherein said serrations are found for only a part of the thickness of each disc.

16. The filter according to Claim 15, wherein all said discs are of like construction including ribs on one face, a flat surface on the opposite face, and serrations along the edge of one of said faces, which serrations are found for only a part of the thickness of this disc.

17. A filter including a housing having an inlet connectable to an upstream pipe, and an outlet connectable to a downstream pipe; and a stack of filter discs disposed within said housing and formed with grooved surfaces along their side faces effective to separate foreign particles from the fluid flowing between said filter discs from the upstream side of the stack to the downstream side thereof;
characterized in that the thickness of each of said filter discs is smaller at its upstream side than at its downstream side, and/or the depth of their grooves is larger at the upstream side than at the downstream side, such that the upstream side of the stack of filter discs is formed with pockets between adjacent discs, in addition to said grooves, for receiving and holding foreign particles separated from the fluid.

18. The filter according to Claim 17, wherein the thickness of each of said filter discs increases uniformly from its upstream side to its downstream side.

19. The filter according to Claim 17, wherein the depth of the grooves of each of said filter discs decreases uniformly from its upstream side to its downstream side.

20. The filter according to any one of claims 17 to 19, wherein the thickness of each of each filter discs at its downstream side is at least twice its thickness at its upstream side.

21. The filter according to any one of claims 17 to 20, wherein the depth of the grooves at the upstream side of the filter disc is at least twice that of the depth at the downstream side of the filter disc.

22. The filter according to any one of claims 17 to 21, wherein at least some of the discs are formed with serrated edges along their upstream sides to further increase the volume of said pockets formed between adjacent discs of the stack.

23. The filter according to Claim 22, wherein alternate discs of the stack are formed with said serrated edges on their upstream sides.

24. The filter according to any one of claims 17 to 23, wherein said filter discs are of annular configuration, whereby said pockets defined between adjacent discs of the stack are also of annular configuration.

25. A filter according to Claim 24, wherein the outer edges of said annular discs constitute said upstream side of the discs.

26. The filter according to Claim 24, wherein the inner edges of said annular discs constitute said upstream sides of the discs.

FIG 1

FIG 2

32

12 — 12

12' 12'

**FIG 3**

132
130
112a

112' — 112

**FIG 5**

34

36 — 30

— 12a

12

34'

36' — 32

12'

**FIG 4**

212a
230
212
112c
232
113

**FIG 6**

FIG 7

FIG 10

FIG 9

FIG 8

514

512

III    III

FIG 11

516

512a

514

512

512b

FIG 12

512a

514

FIG 13

FIG 14

FIG 15

FIG 18

FIG 16

FIG 17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 648 843 (R.K. PEARSON)<br><br>* Column 3, lines 4-27; column 7, lines 35-47 * | 1,3,7, 11,13-15,22-25 | B 01 D 29/42<br>B 01 D 29/46 |
| A | US-A-3 382 982 (R.J. STEVENS)<br>* Column 1, lines 64-72; column 2, lines 1-27 * | 1 | |
| A | US-A-4 410 430 (R. HAGLER Jr.)<br>* Column 6, lines 1-32 * | 1 | |
| A | US-A-1 849 042 (J.A. PICKARD et al.)<br>* Page 2, lines 29-42 * | 2,5,6, 8-10 | |
| | | | TECHNICAL FIELDS SEARCHED (Int. Cl.4) |
| A | FR-A-1 543 176 (J. FRAPART)<br>* Page 1 * | 17-19 | B 01 D |
| A | GB-A- 841 207 (J. MULLER)<br>* Page 1, lines 56-71 * | 17 | |

The present search report has been drawn up for all claims

| Place of search | Date of completion of the search | Examiner |
|---|---|---|
| THE HAGUE | 16-09-1986 | KERRES P.M.G. |